# EUROPÄISCHE PATENTSCHRIFT

(11) **EP 1 128 898 B1**
(45) Veröffentlichungstag und Bekanntmachung des Hinweises auf die Patenterteilung: **15.01.2003**
(21) Anmeldenummer: 99950615.7
(22) Anmeldetag: 05.10.1999
(51) Int. Cl.: B01D 63/06, B23P 11/00

(54) **VERFAHREN ZUR HERSTELLUNG EINES MEMBRANMODULS**
PROCESS FOR PREPARING A MEMBRANE MODULE
PROCEDE DE PREPARATION D'UN MODULE A MEMBRANE

(30) Priorität: 07.10.1998 DE 19846041
(43) Veröffentlichungstag der Anmeldung: 05.09.2001
(73) Patentinhaber: MEMBRAFLOW GMBH & CO. KG Filtersysteme, 73457 Aalen-Essingen (DE)
(72) Erfinder: BLÄSE, Dieter, D-73557 Mutlangen (DE); FEUERPEIL, Hans-Peter, D-73529 Schwäbisch Gmünd (DE)
(74) Vertreter: Dr. Weitzel & Partner
(86) Internationale Anmeldenummer: EP9907356
(87) Internationale Veröffentlichungsnummer: WO00020104

(56) Entgegenhaltungen:
- US-A- 4 473 471
- US-A- 4 640 774
- US-A- 4 849 104
- US-A- 5 062 910

## Beschreibung

Die Erfindung betrifft ein Verfahren zur Herstellung eines Membranmoduls gemäß Oberbegriff des Anspruchs 1. Solche Module sind bekannt. Sie dienen dazu, aus einer Flüssigkeit oder einem Gas eine Komponente abzutrennen. Sie umfassen eine Anzahl von stabförmigen keramischen Filterelementen, die parallel zueinander angeordnet sind. Meist werden Gruppen solcher Filterelemente zusammengefaßt und jeweils an den Enden mittels Deckeln eingespannt. Die Deckel verlaufen dabei senkrecht zu den Stäben. Die Deckel weisen eine der Anzahl der Filterelemente entsprechende Anzahl von Bohrungen auf. Die lichte Weite einer jeden Bohrung ist dabei im allgemeinen etwas größer als das Außenmaß des Endbereiches des einzelnen Stabes. Der Zwischenraum wird ausgefüllt durch einen Dichtungsring.

Ein solches Membranmodul ist beispielsweise aus EP-A-0 270 051 bekannt geworden.

Das Herstellen des einzelnen Filterelementes ist unter anderem mit einem Glühprozeß verbunden, welcher höchste Temperaturen erfordert. Dabei kann es zu einem Verziehen des Materiales kommen, so daß die Filterelemente nicht mehr gradlinig sind, sondern daß - übertrieben gesagt - ein Bananenformeffekt auftritt. Auch sind die Endmaße der Filterelemente nach Vollenden des Herstellungsprozesses nicht vorhersehbar. So können Abweichungen vom Sollmaß eintreten. Steckt man einen fertigen Dichtungsring auf den Endbereich eines Filterelementes, so kann dies je nach Außenmaß des Filterelementes in einem Falle zu einer Überdehnung des Dichtungsringes führen, und im anderen Falle kann es dazu führen, daß der Dichtungsring nicht genügend stramm oder gar mit Spiel auf dem Endbereich sitzt. Beide Fälle sind mit Nachteilen verbunden. Im Falle der Überspannung kommt es über kurz oder lang zu einem vorzeitigen Ausfall des Dichtungsringes, und im Falle des Untermasses zu Leckage.

Um diesen Nachteil zu vermeiden, wird gemäß EP-A-0 270 051 A2 vorgeschlagen, die Dichtungsringe nur innen fertig zu bearbeiten, sodann auf den Endbereich des Filterelementes aufzustecken und anschließend auch außen fertigzubearbeiten.

Ein solches Verfahren hat den folgenden Nachteil:
Nach längerem Betrieb kommt es zu Ermüdungen des Dichtungsmateriales. Die Dichtungen sind dann nicht mehr funktionsfähig und fallen aus. Es ist daher notwendig, die Dichtungen über kurz oder lang auszutauschen. Damit die neu anzufertigenden Dichtungen das richtige Außenmaß haben, müssen sie wiederum auf Filterelemente aufgesteckt und in aufgestecktem Zustand außen bearbeitet werden. Zu diesem Zwecke müssen die Filterelemente einzeln aus dem Membranmodul ausgebaut werden. Dies bedeutet einen erheblichen Aufwand.

Der Erfindung liegt die Aufgabe zugrunde, ein Verfahren anzugeben, mit dem sich Membranmodule kostengünstig herstellen lassen, und zwar derart, daß die Dichtungen ihre Abdichtfunktion einwandfrei erfüllen und eine möglichst hohe Lebensdauer haben. Ferner soll das Ersetzen schadhafter Dichtungen leicht, schnell und einfach vorgenommen werden können. Ferner soll durch die Erfindung ein Membranmodul geschaffen werden, das seine Funktionen einwandfrei erfüllt, das inbesondere an den abgedichteten Stellen dicht ist, und das einfach im Aufbau und kostengünstig im Betrieb sowie bezüglich der Wartung ist.

Diese Aufgabe wird durch die Kennzeichnenden Merkmale des Anspruchs 1 gelöst.

Statt des umständlichen und teuren Verfahrens gemäß dem Stande der Technik sind die Erfinder einen anderen Weg gegangen:
Sie haben erkannt, daß der einzelne Dichtring bei seiner Herstellung nicht unbedingt auf ein Original-Filterelement zum Zwecke seiner Bearbeitung aufgesteckt werden muß, damit die Außenabmessungen der Dichtung den Anforderungen genügen. Stattdessen wird gemäß der Erfindung ein Halter verwendet, der im Endbereich im wesentlichen die Außenkontur der Filterelemente aufweist, und dessen Außenabmessungen im Endbereich gleich den mittleren Außenabmessungen der Endbereiche aller Filterelemente entspricht. Jede einzelne Dichtung wird auf einen solchen Halter ("Dummy") aufgesteckt und auf seiner Außenfläche bearbeitet, so daß die Außenfläche Soll-Abmessungen nach der Bearbeitung aufweist. Sodann wird die fertig bearbeitete Dichtung auf ein Filterelement aufgesteckt. Da die Filterelemente in ihren Endbereichen - wie oben ausgeführt - unterschiedliche Abmessungen haben, wird zwar die einzelne Dichtung von Filterelement zu Filterelement unterschiedliche Außenabmessungen aufweisen, die von dem Idealmaß abweichen. Jedoch haben die Erfinder erkannt, daß diese Abweichung für die Funktion der Dichtung ganz unerheblich ist. Sie liegt im Toleranzbereich.

Das erfindungsgemäße Verfahren hat den ganz entscheidenden Vorteil, daß auch zum Herstellen von Austausch-Dichtungen, welche schadhafte Dichtungen ersetzen sollen, wiederum der Dummy verwendet werden kann, was viel Aufwand erspart.

Die Erfindung läßt sich unabhängig von der Querschnittskonfiguration der stabförmigen Filterelemente anwenden. Die Filterelemente können einen kreisrunden, ovalen, sechseckigen oder polygonen Querschnitt haben.

Die Erfindung ist ferner unabhängig davon, ob der Endbereich des einzelnen stabförmigen Filterelementes gegenüber dem Hauptteil Übermaß oder Untermaß aufweist. Es ist besonders günstig, das einzelne stabförmige Filterelement im Endbereich gegenüber dem Hauptteil mit Untermaß zu versehen. Hierdurch entsteht zwischen dem Hauptteil des einzelnen stabförmigen Filterelementes und dessen Endbereichen jeweils eine Schulter. Diese Schultern können dazu ausgenutzt werden, den Axialschub aufzunehmen, der beim Betrieb des Membranmoduls auf die Filterelemente einwirkt.

Die Erfindung ist anhand der Zeichnungen erläutert. Darin ist im einzelnen folgendes dargestellt:
- Figur 1: zeigt ein Membranmodul in einer Seitenansicht, mit teilweise weggeschnittenem Gehäuse.
- Figur 2: zeigt einen Ausschnitt aus einem Membranmodul im Endbereich eines Filterelementes.
- Figur 3: zeigt einen Ausschnitt aus einem weiteren Membranmodul, wiederum im Endbereich eines Filterelementes.
- Figur 4: zeigt in perspektivischer Darstellung den Endbereich eines Filterelementes.
- Figur 5: zeigt wiederum in perspektivischer Darstellung den Endbereich eines anderen Filterelementes.
- Figur 6: zeigt in perspektivischer Darstellung einen Endbereich eines weiteren Filterelementes.

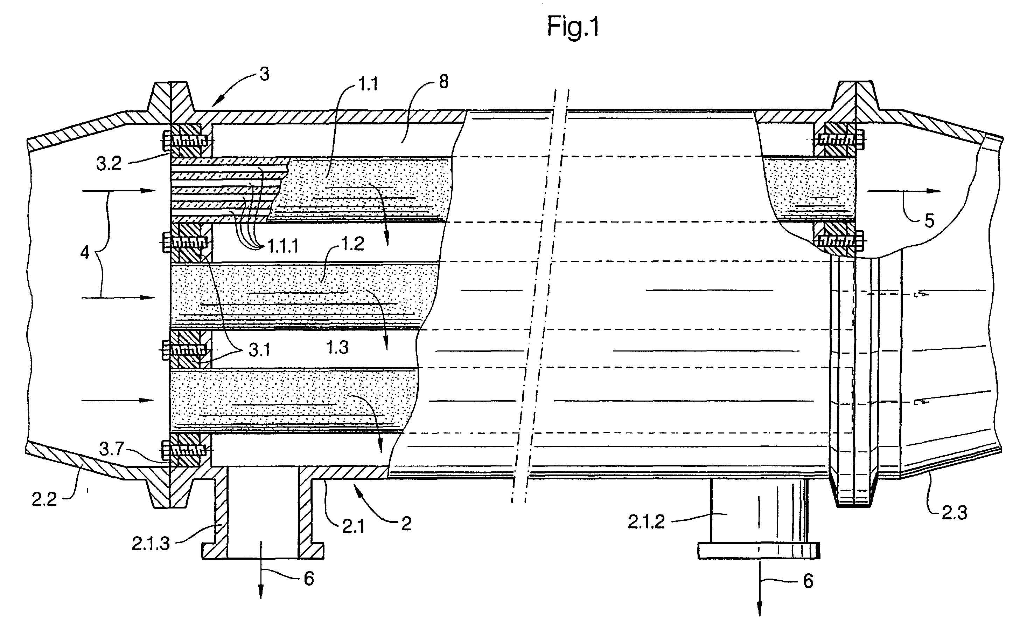

Das in Figur 1 gezeigte Membranmodul umfaßt eine Anzahl von Filterelementen 1.1, 1.2, 1.3. Die Filterelemente sind stabförmig. Sie haben eine zylindrische Gestalt und einen kreisförmigen Querschnitt. Jedes Filterelement ist von einer Mehrzahl von Kanälen 1.1.1 durchzogen.

Das Membranmodul umfaßt ferner ein Gehäuse 2, das die Filterelemente 1.1, 1.2, 1.3 umschließt. Das Gehäuse 2 ist ebenfalls kreisförmig. Es umfaßt einen Hauptteil 2.1 sowie konische Anschlußteile 2.2 und 2.3. Der Hauptteil 2.1 weist zwei Auslaufstutzen 2.1.2 und 2.1.3 auf.

Man erkennt femer eine Deckeleinheit 3, die sich jeweils an den Enden der Filterelemente 1.1, 1.2 und 1.3 befindet. Jede Deckeleinheit 3 umfaßt eine Dichtung 3.1, eine äußere Platte 3.2 und eine innere Platte 3.3. Die innere Platte 3.3 ist in diesem Falle mit dem Hauptteil 2.1 des Gehäuses 2 einteilig. Die Bauteile 3.1, 3.2 und 3.3 sind sandwichartig zusammengefügt und durch Schrauben zusammengehalten.

Die Kanäle 1.1.1 der Filterelemente 1.1, 1.2 und 1.3 werden mit zu filterndem Medium beschickt - siehe die Pfeile 4. Pfeil 5 veranschaulicht den Austritt des Mediums.

Das sogenannte Permeat - Pfeile 7 - tritt in den Raum 8 ein, der die Filterelemente 1.1, 1.2, 1.3 umgibt, und tritt durch die Auslässe 2.1.2, 2.1.3 aus dem Hauptteil 2.1 des Gehäuses 2 wieder aus.

Wie oben ausgeführt, besteht die Dichtung 3.1 im vorliegenden Falle aus einer Platte mit Bohrungen. Diese Platte wird gemäß der Erfindung wie folgt hergestellt:
Zunächst wird ein Rohling der Platte 3.1 hergestellt, beispielsweise durch Gießen. Der Rohling wird sodann mit den genannten Bohrungen versehen. Nunmehr wird die Platte auf stabförmige Halter (Dummies) aufgesteckt. Diese Dummies haben Außendurchmesser, die einem mittleren Durchmesser aller Filterelemente 1.1, 1.2 und 1.3 entsprechen, somit einem statistischen Mittelwert. Sodann wird die Dichtungsplatte 3.1 außen bearbeitet, beispielsweise durch Drehen. Dabei wird das Sollmaß erzeugt. Sodann wird die Dichtungsplatte 3.1 von den Dummies abgenommen und auf normale Filterelemente aufgesteckt. Das Außenmaß der Dichtungsplatte 3.1 ändert sich dabei entweder gar nicht oder nicht nennenswert, so daß es praktisch zu keiner Abweichung vom Außen-Sollmaß kommt.

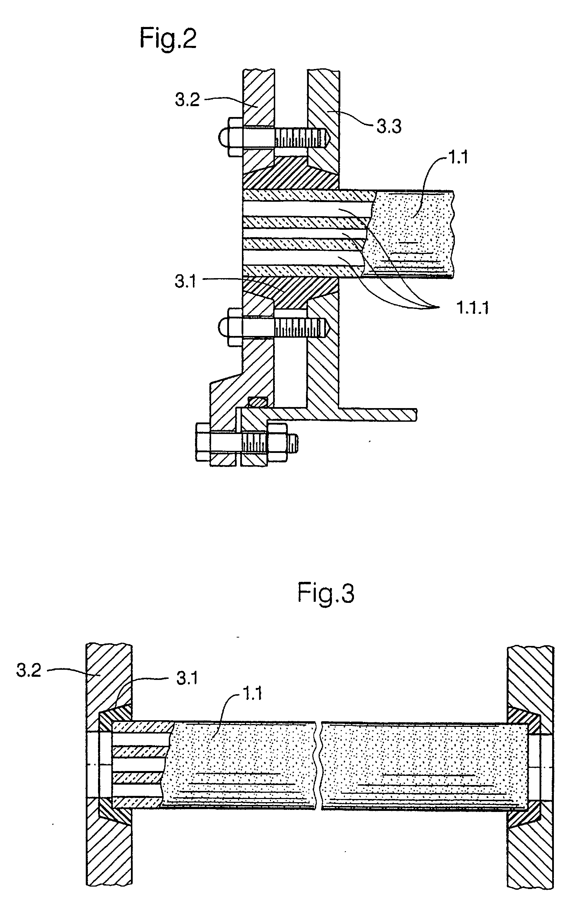

In Figur 2 erkennt man wiederum ein Filterelement 1.1 mit einer Mehrzahl von Kanälen 1.1.1. Das Filterelement 1.1 ist umgeben von einem Dichtungsring 3.1. Der Dichtungsring ist eingespannt in zwei Deckelplatten, nämlich eine äußere Deckelplatte 3.2 und eine innere Deckelplatte 3.3. Die beiden Deckelplatten sind durch Schrauben miteinander verspannt.

Im Gegensatz zu der Ausführungsform gemäß Figur 1 ist hierbei keine plattenförmige Dichtung vorgesehen, die sämtlichen Filterelementen zugeordnet ist, sondern eine Vielzahl von Dichtungsringen, so wie der dargestellte Dichtungsring 3.1.

Auch bei dieser Ausführungsform wurde das erfindungsgemäße Verfahren zum Herstellen und Montieren der Dichtung angewandt.

Bei der Ausführungsform gemäß Figur 3 ist der Endbereich des einzelnen Filterelementes 3.1.1 von einem Dichtungsring 3.1 umschlossen. Der Dichtungsring 3.1 ist - wie man sieht - topfförmig ausgebildet und hat eine konische Außenkontur. Es ist nur eine einzige Deckelplatte 3.2 vorgesehen.

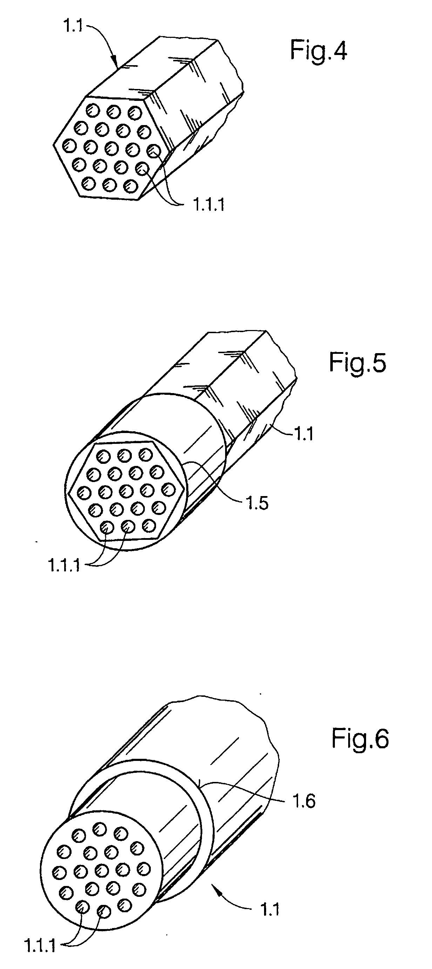

Das in Figur 4 gezeigte Filterelement 1.1 hat den Querschnitt eines regelmäßigen Sechsecks. Es könnte auch einen runden oder andersartigen Polygon-Querschnitt haben.

Das in Figur 5 gezeigte Filterelement 1.1 ist ebenfalls von sechseckigem Querschnitt. Es ist in seinem Endbereich mit einem Bund 1.5 versehen. Der Bund 1.5 hat einen kreisförmigen Querschnitt. Er ist dazu bestimmt, von einer Dichtung umschlossen zu werden, so wie in den Figuren 1 bis 3 gezeigt.

Das in Figur 6 gezeigte Dichtungselement 1.1 hat in seinem Endbereich gegenüber seinem Hauptteil Untermaß, so daß ein Bund 1.6 vorhanden ist.

Es versteht sich, daß bei sämtlichen Ausführungsformen das erfindungsgemäße Verfahren bezüglich des Herstellens und Aufbringens der Dichtung angewandt werden kann.

Die Erfinder haben weiterhin folgendes erkannt:
Das zu filternde Medium tritt auch im Endbereich durch das Keramikmaterial hindurch. Es gelangt somit von den Kanälen des Filterelementes zur Dichtung. Je nach Zusammensetzung des zu filternden Mediums kann dies zu einem chemischen Angriff auf das Dichtungsmaterial und damit zu einem vorzeitigen Verschleiß der Dichtung führen.

Gemäß einem weiteren Gedanken der Erfindung kann es daher zweckmäßig sein, den Endbereich des einzelnen Filterelementes auf der Umfangsfläche und gegebenenfalls auch auf der Stirnfläche zu versiegeln. Als Siegelmaterial kommt beispielsweise eine Folie in Betracht, die die genannten Flächen des Filterelementes umgibt, und die dafür sorgt, daß eine Berührung des Dichtungsmateriales mit dem zu filternden Medium unterbleibt.

## Patentansprüche

1. Verfahren zum Herstellen eines Membranmoduls, umfassend eine Anzahl von stabförmigen, keramischen Filterelementen (1.1, 1.2, 1.3). die parallel zueinander angeordnet und an den Stabenden von Deckeln (3) eingespannt sind, die ihrerseits senkrecht zu den Stäben (1.1, 1.2, 1.3) verlaufen, ferner Dichtungen (3.1), die zwischen den Stabenden sowie Bohrungen in den Deckeln (3) vorgesehen sind, **gekennzeichnet durch** die folgenden Merkmale:
1.1 es wird zunächst die einzelne Dichtung (3.1) teilweise hergestellt, indem ihre Innenbohrung, die zum Umschließen des Stabendes bestimmt ist, auf Fertigmaß gebracht wird, während die Außenfläche der Dichtung (3.1) unbearbeitet bleibt, so daß ein Dichtungs-Rohling entsteht;
1.2 sodann wird der Dichtungs-Rohling auf einen Halter aufgesteckt, der im Aufsteckbereich Außenabmessungen aufweist, die den mittleren Außenabmessungen aller Filterelemente oder einer Vielzahl von Filterelementen (1.1, 1.2, 1.3) entsprechen;
1.3 sodann wird der auf den Halter aufgesteckte Dichtungs-Rohling auf seiner Außenfläche bearbeitet, so daß er ein Sollmaß erreicht und damit zur fertigen Dichtung (3.1) wird;
1.4 sodann wird die fertige Dichtung auf den Endbereich eines Filterelementes (1.1, 1.2, 1.3, 1.4) aufgesteckt und - zusammen mit den übrigen Elementen - zu einem Membranmodul fertigmontiert.

2. Verfahren nach Anspruch 1, **dadurch gekennzeichnet, daß** die Endbereiche eines jeden Filterelementes (1.1, 1.2, 1.3) gegenüber den Hauptbereichen Untermaß haben.

3. Verfahren nach einem der Ansprüche 1 oder 2, **dadurch gekennzeichnet, daß** die Endbereiche der Filterelemente (1.1, 1.2, 1.3) zumindest auf ihren Mantelflächen und gegebenenfalls auf ihren Stirnflächen versiegelt werden, so daß eine Berührung zwischen dem zu filternden Medium und dem Material der Dichtung während des Betriebes des Membranmoduls unterbunden wird.

## Claims

1. Process for the production of a membrane module, comprising a number of rod-shaped, ceramic filter elements (1.1, 1.2, 1.3), which are arranged parallel to one another and are clamped at the rod ends by covers (3), which in turn run perpendicular to rods (1.1, 1.2, 1.3), and also seals (3.1), which are provided between the ends of the rods, as well as openings in the covers (3), which is **characterised by** the following features:
1.1 first the individual seal (3.1) is produced in part by making its inner opening to the finished size, which is specified for enclosing the end of the rod, while the outer surface of the seal (3.1) remains unprocessed, so that a blank seal is formed;
1.2 then the blank seal is attached to a holder, which has outer dimensions in the attachment region that correspond to the average outer dimensions of all filter elements or a plurality of filter elements (1.1, 1.2, 1.3);
1.3 then the blank seal attached to the holder is processed on its outer surface, so that it attains a nominal size and thus becomes the finished seal (3.1);
1.4 the the finished seal is attached to the terminal region of a filter element (1.1, 1.2, 1.3, 1.4) and - together with the other elements - is assembled into a finished membrane module.

2. Process according to claim 1, **characterised in that** the terminal regions of each filter element (1.1, 1.2, 1.3) are under-dimensioned relative to the main regions.

3. Process according to either of claims 1 or 2, **characterised in that** the terminal regions of the filter elements (1.1, 1.2, 1.3) are covered at least on their lateral surfaces, and optionally on their front surfaces, so that there is no contact between the medium to be filtered and the material of the seal during operation of the membrane module.

## Revendications

1. Procédé de réalisation d'un module à membrane comprenant un certain nombre d'éléments de filtre en céramique (1.1, 1.2, 1.3), en forme de tiges, installés de manière parallèle les uns par rapport aux autres et serrés au niveau des extrémités des tiges par des couvercles (3) perpendiculaires aux tiges (1.1, 1.2, 1.3), ainsi que des joints (3.1) prévus entre les extrémités de tiges et les perçages dans les couvercles (3),
**caractérisé par** les caractéristiques suivantes :
1.1 on réalise d'abord au moins en partie le premier joint (3.1) en réalisant à la mesure définitive, son perçage intérieur défini par l'entourage de l'extrémité de tige, alors que la surface extérieure du joint (3.1) n'est pas travaillée, ce qui aboutit à une ébauche de joint,
1.2 puis on engage l'ébauche de joint sur un support ayant, au niveau de la zone d'engagement, les dimensions extérieures correspondant aux dimensions extérieures moyennes de tous les éléments de filtre ou d'un certain d'élément de filtre (1.1, 1.2, 1.3),
1.3 puis on usine la surface extérieure de l'ébauche de joint engagée sur le support pour arriver à une mesure de consigne et ainsi au joint terminé (3.1),
1.4 puis on engage le joint terminé sur la zone d'extrémité d'un élément de filtre (1.1, 1.2, 1.3, 1.4) et (avec les autres éléments) on termine le montage pour obtenir un module à membrane.

2. Procédé selon la revendication 1,
**caractérisé en ce que**
les zones d'extrémité de chaque élément de filtre (1.1, 1.2, 1.3) sont sous-dimensionnées par rapport aux zones principales.

3. Procédé selon l'une quelconque des revendications 1 ou 2,
**caractérisé en ce que**
les zones d'extrémité des éléments de filtre (1.1, 1.2, 1.3) sont scellées au moins au niveau de leur surface enveloppe et le cas échéant au niveau de leur surface frontale pour interdire un contact entre le milieu à filtrer et la matière du joint pendant le fonctionnement du module à membrane.
